# EUROPEAN PATENT APPLICATION

(11) **EP 3 339 015 A1**
(43) Date of publication of application: **27.06.2018**
(21) Application number: 17173158.1
(22) Date of filing: 26.05.2017
(51) Int. Cl.: B32B 5/22, B32B 5/24, B32B 25/14, B32B 27/30, B32B 27/40, B32B 5/02, B32B 5/32, B32B 27/06, B32B 27/08, B32B 27/12, D06N 3/14

(54) **FLEXIBLE COMPOSITE MATERIAL, METHOD AND USES THEREOF**

(30) Priority: 21.12.2016 PT 109798
(71) Applicant: TMG - Tecidos Plastificados e Outros Revestimentos Para a Indústria Automóvel, SA, 4770-583 Säo Cosme Vale (PT)
(72) Inventor: LOBO, Irene, 4700-028 Braga (PT); PINHO, Elizabete, 4050-300 Porto (PT)
(74) Representative: Patentree, Lda.

(57) **Abstract**

The present description refers to a flexible composite material, obtaining method and uses thereof.

The present material can be used in the production of upholstery, namely upholstery for the automobile industry, in particular for automobile seats.

## Description

### Technical domain

The present description refers to a flexible composite material, obtaining method and uses thereof.

The present material can be used in the production of upholstery, namely upholstery for the automobile industry, in particular for automobile seats.

### Background

Traditionally natural leather is used for upholstery, in particular for the automobile industry, as it is associated to a higher performance at the level of mechanical properties namely flex resistance, chemical resistance such as resistance to grease, sun screen and constituents thereof. For these reasons, it is considered a material of election for upholstery, but presents a high price.

Alternatively, the market of PVC applied to upholstery, namely to that of the interior of the automobile has increased, both due to the optimization of the formulations, and due to its versatility, in particular greater versatility in terms of aesthetic effects, such as 3D superficial patterns and due to its reduced cost. This fact has promoted the use of PVC in applications which are traditionally in natural leather. That is the case of its use in the sitting area of automobile upholstery, where its application in substitution of natural leather is still a technical challenge.

Upholstery, namely upholstery for automobiles, are exposed to multiple factors that affect the quality/maintenance of the material used, such as:
- Abrasion due to the entrance/exit of passengers from the vehicle;
- Contact with passenger sweat, hands, body lotion, perfume, cosmetics; Accidental spillage of miscellaneous products;
- Exposure to external environmental factors, such as different humidity conditions, temperature, light;
- And also cleaning products and procedures.

Therefore, the use may result in wear of these materials and their serious degradation, leading to the replacement of the material and/or to complaints by clients, particularly due to crack, fissure, abrasion, colour fading, deformation and/or surface wear.

These phenomena occur essentially due to the migration of substances of the diverse layers of the material and/or through extraction of external agents (namely grease or detergents) or due to penetration of substances into the material which were not present. They are therefore bidirectional phenomena of diffusion.

These facts are described in order to illustrate the technical problem solved by the embodiments of the present document.

### General Description

To solve these problems, a new flexible composite material was developed, for vehicle upholstery, wherein the proposed structure and combination of materials presents greater resistance to fissure throughout time, with high flexure rates and also resistance to chemical attack even after being subject to several degradation cycles at laboratorial scale, preserving resistance characteristics even after contact with oil, grease, namely in contact with the human skin, even though subjected to different thermal amplitudes.

The material described in the present disclosure presents a compact structure of thermoplastic polyurethane (TPU) with polyvinyl chloride (PVC) in sublayers, wherein the combination of different TPUs namely aliphatic TPU sublayers and aromatic TPU on the intermediate layer, allows the sublayer set to improve the barrier effect, both against the passage of plasticisers, and against the inflow of foreign fluids into the material, thereby allowing for an increase in the quality of the material and the durability of the product with the desired quality, even after subjecting the product to several cycles of flexure degradation under extreme extraction and temperature conditions.

One of the aspects of the present disclosure is related to a flexible composite material comprising the following layers:
a support layer selected from the following list: fabric, nonwoven fabric, knitted fabric, foam, or mixtures thereof;
an intermediate layer of polyvinyl chloride (PVC) containing a plurality of sublayers;
a compact layer of thermoplastic polyurethane (TPU) containing a plurality of sublayers;
an outer lacquer or varnish layer;
wherein the TPU compact layer comprises:
   an aliphatic TPU sublayer in contact with the PVC layer;
   one or more aromatic TPU intermediate sublayers;
   an aliphatic or aromatic TPU sublayer in contact with the finishing outer layer, preferably in order to obtain even better results an aliphatic TPU may be used.

For best results, in another embodiment of the flexible composite material, the TPU compact layer may be extruded.

For best results, in another embodiment of the flexible composite material, the described material is resistant to impact and fatigue according to VDA 230-225:2014 standard after at least 10,000 cycles, preferably at least 30,000, still more preferably 50,000 cycles, still more preferably 100,000 cycles, even more preferably 1,000,000 cycles.

In an embodiment, the flexible composite material applied in upholstery for automobiles presents in both situations of extreme cold/heat a good resistance to impact, fatigue and crack even after 14 days at 100 °C and 10,000 flex cycles at -20 °C (by the VDA 230-225:2014 method), or preferably 30,000 flex cycles. It is also appreciated that under room temperature conditions the material presents a very good resistance to impact and fatigue even with more than 30,000 flex cycles (by the VDA 230-225:2014 method), preferably 50,000 cycles, even more preferably 100,000 cycles, still more preferably 1,000,000 cycles.

In an embodiment, the flexible composite material applied in upholstery for automobiles presents in both situations of extreme cold/heat a good resistance to impact, fatigue and crack. In particular, when subjected to VDA 230-225:2014 test (Crack resistance of upholstery fabrics - Requirements and methods of test) applying a mixture of oils (namely babassu oil (CAS 91078-92-1), jojoba oil (CAS 61789-91-1) squalene (CAS 111-02-4)) for 72 h at 40 °C and at 10,000 flex cycles at -20 °C (by the VDA 230-225:2014 method), or preferably 30,000 flex cycles.

For best results, in another embodiment of the flexible composite material, wherein the PVC intermediate layer is obtainable through coating.

For best results, in another embodiment of the flexible composite material, wherein the aliphatic TPU can be selected from a list constituted by: TPU comprising polyols and isocyanates, in particular hexamethylene diisocyanate (HDI), isophorone diisocyanate (IPDI), 2-methylphenthane diisocyanate (MPDI), 2,4,4-trimethylhexanethylene diisocyanate (TMDI), norbornane (NBDI), dicyclohexylmethane diisocyanate (HMDI), meta-tetramethylxylene diisocyanate (TMXDI), 1,4-cyclohexane diisocyanate (CHDI), polyether, polyester, polycaprolactone, polycarbonate, polyols derived from castor oil, hydroxylated liquid polybutadienes (HLPBs), acrylics or mixtures thereof, among others.

For best results, in another embodiment of the flexible composite material, wherein the aromatic TPU can be selected from a list constituted by

4,4'-diphenyl methane diisocyanate (MDI), diisocyanatemethylbenzene, toluene diisocyanate (TDI) and 1,5-naphthalene diisocyanate (NDI), p-phenylene diisocyanate (PPDI) isomers thereof; or mixtures thereof, among others.

For best results, in another embodiment of the flexible composite material, wherein the thickness of the PVC layer may range between 50-1000 µm, preferably 200-650 µm.

For best results, in another embodiment of the flexible composite material, the thickness of the TPU layer may range between 20-1000 µm, preferably 150-500 µm.

For best results, in another embodiment of the flexible composite material, wherein the TPU layer comprises between 1-5 sublayers, preferably 2-3 sublayers. Preferably, the outer sublayers are aliphatic TPU layers.

For best results, in another embodiment, the flexible composite material may further comprise an outer lacquer layer connected to the TPU, in particular the lacquer layer is connected to an aliphatic TPU. The layer of lacquer or mixture of lacquers is a surface protective layer, in order to improve the intended superficial properties, namely regarding touch, chemical resistance, scratch and abrasion resistance, aesthetical effect, among other properties.

For best results, in another embodiment, the flexible composite material may further comprise a layer of lacquer or mixtures of lacquers, or several sublayers of lacquers or mixtures of lacquers namely 1, 2, 3 or 4 sublayers of lacquer coating the TPU compact layer.

For best results, in another embodiment of the composite flexible material, the material may further comprise a layer of lacquer or mixtures of lacquers which contacts with an aliphatic/aromatic, preferably an aliphatic, TPU sublayer.

For best results, in another embodiment the flexible composite material, the lacquer may be selected from a solvent- or aqueous-based lacquer or lacquers-based list: polyurethane, acrylic, vinyl acrylic, polyamide, reticulated by isocyanate, polycarbodiimide or by ultraviolet radiation by resorting namely to acrylate and photoiniator groups, or mixtures thereof.

For best results, in another embodiment of the flexible composite material, the TPU and/or PVC layers may further comprise pigment, additive, stabilizer, filler, plasticisers, blowing agents, expansion reaction catalyst (kicker), or mixtures thereof.

For best results, in another embodiment, the flexible composite material may also contain additional components whose addition does not compromise the barrier effect against migration of additives of the intended lower PVC layer, such as polyolefins (e.g.: Polyethylene and polypropylene), compatibilizers (e.g.: ethylene terpolymers and graft copolymers), fillers (eg.: calcium carbonate, silicates, barium sulphate), stabilizers (e.g.: phenolics, phosphites and hydroxylamines), antistatics (eg.:, permanent, such as polyamide and polyeter copolymers, or migrating, such as hydrophylic/lipophylic), among others or mixtures thereof.

In another embodiment of the flexible composite material, each layer may comprise the following thickness:
the textile support layer between 300-2000 µm, preferably 400-600 µm;
the PVC layer between 50-1000 µm, preferably 200-650 µm;
the TPU compact layer between 20-1000 µm, preferably 150-500 µm;
the layer of lacquer or lacquers between 1-100 µm, preferably 10-15 µm.

Another aspect of the present disclosure relates to upholstery, in particular to upholstery for the automobile industry comprising one of the flexible composite materials described in the present document.

Another aspect of the present disclosure relates to a seat for automobiles comprising one of the flexible composite materials described in the present document.

As it can be seen, the material is obtained without resorting to adhesives, and when the material is thus obtained there is an integration between the TPU and PVC layer, further increasing the tear, fissure resistance and maintaining the elastic properties of the material.

Another embodiment of the process may further comprise lacquering the product obtained in the previous step through rotogravure, in particular with aqueous- and/or solvent-based polymers, aqueous dispersions, PUR solvent base lacquers.

Another embodiment of the process may further comprise engraving the material with a predefined texture/image.

The flexible composite material for upholstery described in this document is a hybrid material with multiple layers/sublayers. The manufacturing process allows obtaining a structure with a top layer - TPU layer - comprising a hybrid polymer mixture acting as a barrier both against exterior oils which try to penetrate into the material and to prevent the loss of plasticisers through the PVC intermediate layer.

Another aspect of the present disclosure relates to a process for obtaining the flexible composite material described in the present document comprising the following steps:
- obtaining a PVC intermediate layer through coating or enduction of the PVC intermediate layer and a support layer,
- extruding a TPU compact layer with simultaneous gluing of the material obtained in the previous step.

In an embodiment, the process herein described comprises the following steps:
- obtaining a PVC compact layer through coating or enduction of the PVC layer and a support layer;
- extruding a TPU compact layer,
- laminating the PVC compact layer with the extruded TPU layer.

In an embodiment, the PVU lacquering process may further comprise the following stages:
- the material is amended with wider compact TPO in order to prevent the winding of the selvedge at the beginning of the roll and ensure an homogeneous lacquer application;
- preheating by contacting the surface of the material through a roll between 80-140 °C, more preferably between 120-140 °C. The residence time for the lower layers ranges between 13-17 sec and the upper layer ranges between 40-51 secs;
- corona treatment may be applied on the PVC semimanufactured surface, on the PVC side;
- the process consists in the application of 1 to 6 layers of lacquer through rotogravure cylinders, capable of applying amounts between 5 and 25 g/m2, the drying temperature being between 130-150 °C.

In an embodiment, the material may also be engraved with a predefined pattern, to confer texture for a better aesthetic effect, for example, imitation of the surface of natural leather.

In an embodiment, the engraving process may comprise the following stages:
- before preheating, the selvedge is cut only on a part of the PVC semimanufacture, so that 1cm PVC is left on each side so as to guarantee the quality of the engraving in this area of the article;
- preheating the face of the article in an oven between 75-150 °C, preferably at 100 °C, followed by drum between 100-180 °C, preferably at 135 °C.
- the article is heated with infrared emitted in its different wavelengths, between 1-3 µm, but preferably > 1,4 µm. The panel temperature is between 140-200 °C, preferably at 170 °C. The article in this heating zone is supported by a cooled teflon roller bridge (7-35 °C, preferably at 25 °C);
- after heating the article passes the calender composed of the engraving cylinder and the counter cylinder. Both cylinders are cooled, the engraving cylinder to a temperature ranging between 7-40 °C, preferably 20 °C, and the rubber cylinder between 7-25, preferably 7 °C.
- the engraving cylinder may be of a metallic or non-metallic alloy;
- after passing in the calender, the article goes through a horizontal roller bridge (in contact with the reverse side) cooled to a temperature ranging from 5-15 °C, preferably 15 °C;
- the cooling zone then follows, wherein the article is contacted on both sides, with rollers cooled at temperatures ranging from 5-60 °C, preferably 20 °C.

### Brief Description of the Drawings

For an easier understanding, drawings are herein attached, which represent preferred embodiments and are not intended to limit the scope of the present disclosure.

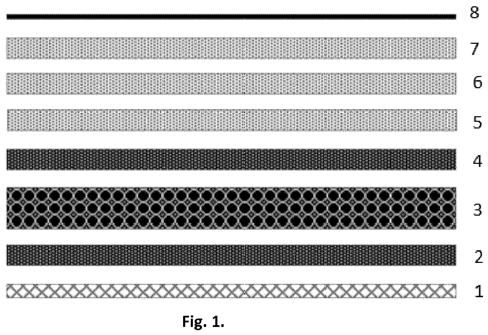

Figure 1 illustrates an embodiment of the flexible composite material described
   wherein 1 represents a textile support layer;
   wherein 2 represents a PVC-based adhesive foam; wherein 3 represents a PVC-based foam;
   wherein 4 represents the PVC compact layer;
   wherein 5 represents an aliphatic nature TPU layer; wherein 6 represents a TPU layer of aromatic nature
   wherein 7 represents a TPU layer of aliphatic or aromatic nature;
   wherein 8 represents a lacquer finishing layer containing 1 to 6 layers in a total of 1 to 100 m.

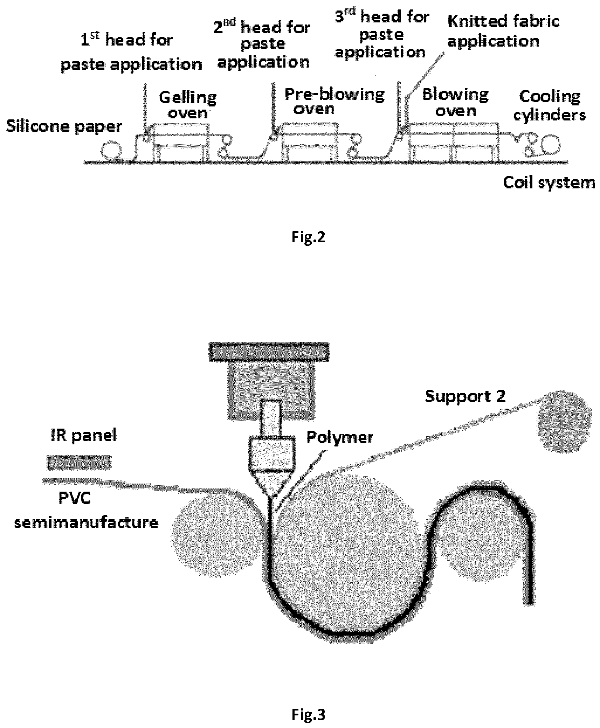

Figure 2 illustrates an embodiment of the coating process.
Figure 3 illustrates an extrusion process with detailed infrared panel.

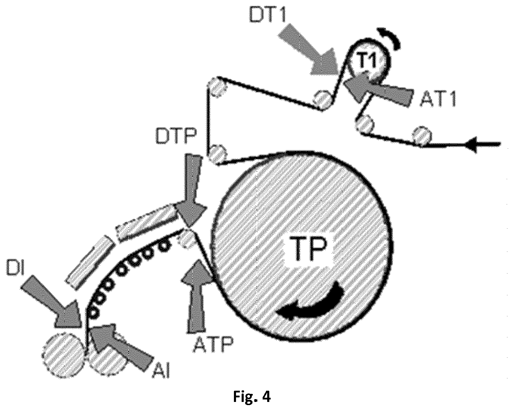

Figure 4 illustrates an embodiment of an engraving process.

### Detailed Description

The present description refers to a flexible composite material, obtaining method and uses thereof with surprising resistance to tear, fissure and/or cracking of the material under conditions of extreme use, namely in the presence of oils and low temperatures.

In an embodiment, the flexible composite material described in the present document comprises a plurality of layers with a variation of their chemical nature and the process used for obtaining thereof. This new material presents a structure of thermoplastic polyurethane (TPU) with polyvinyl chloride (PVC) in sublayers, wherein the TPU layer acts as a barrier layer against the inflow of plasticisers, and/or against the inflow of foreign fluids into the material, thereby allowing for an increase in the quality of the material and the durability of the product due to the combination of different TPUs.

In an embodiment, the production of the flexible composite material may comprise four sequential stages:
- producing a PVC semimanufacture through coating/enduction of the PVC compact layer + foam + adhesive foam + textile (1^{st} Stage);
- extruding the TPU compact layer with simultaneous adhesion of the PVC semimanufacture obtained in the previous step, in this way obtaining a PVC/TPU semimanufacture (2^{nd} Stage), preferably by pre-heating the PVC with infrared;
- optionally, lacquering the PVC+TPU semimanufacture by means of rotogravure with aqueous- or solvent-based polymers (3^{rd} Stage);
- optionally, the material obtained in the previous step may also be engraved for application of surface embossing conferring the final intended appearance (4^{th} Stage).

Descriptions of possible embodiments for each stage shall be described below.

In an embodiment of the production stage of a PVC semimanufacture, several sublayers can be used such as, for example, the sublayers exemplified in Table 1.

Table 1 - Description of a preferential embodiment wherein raw materials and amounts used per layer of PVC semimanufacture may be observed.

| **Layer** | **Description** | **Quantity** |
|---|---|---|
| **PVC Compact Layer 100 g/m2** | Linear plasticiser | 40 |
| | Polymeric plasticiser | 20 |
| | Stabilizer | 1,8 |
| | Sodium perchlorate | 0,27 |
| | Soybean oil | 2 |
| | PVC | 60 |
| | Pigment | 2,5 |
| **Foam 150 g/m2** | Linear plasticiser | 30 |
| | Polymeric plasticiser | 35 |
| | Stabilizer | 2,2 |
| | Co-stabilizer | 0,33 |
| | PVC | 20 |
| | PVC | 40 |
| | Antimony trioxide flame retardant | 2,5 |
| | Azodicarbonamide blowing agent | 3,74 |
| | Pigment | 1,2 |
| **Adhesive foam 120 g/m2** | Linear plasticiser | 30 |
| | Polymeric plasticiser | 35 |
| | Stabilizer | 2,23 |
| | Co-stabilizer | 0,34 |
| | PVC | 60 |
| | Antimony trioxide flame retardant | 2 |
| | Azodicarbonamide blowing agent | 3,79 |
| **Support Layer** | Knitted fabric | |

The layers are produced through enduction process, with deposition of PVC fluid pastes (plastisol) prepared beforehand, on a silicone paper support, in a continuous process.

In an embodiment, the PVC layer comprised by a plurality of sublayers is produced in an enduction process in the following order:
- deposition of plastisol paste for a compact layer, with a viscosity (at 20 °C) between 1000 and 8000 cps, onto a support, being spread with the aid of a knife and subsequently undergoing a gelling process inside an oven at temperatures ranging between 180-230 °C;
- deposition of the intermediate plastisol layer, relative to the foam, with a viscosity (at 20 °C) between 1000 and 8000 cps, on the surface layer, being spread with the aid of a knife and subsequently undergoing a pre-gelling process inside an oven with temperatures ranging between 130-150 °C;
- deposition of a plastisol gluing foam layer on the intermediate layer, with a viscosity (at 20 °C) between 8000 and 20,000 cps, being spread with the aid of a "knife/blade" and on which a substrate, which may be a textile, is applied. The set composed of the various layers and substrate undergoes a gelling process inside an oven with temperatures ranging between 180-230 °C;
- then the previous set of the plurality of layers together with the substrate is removed from the paper support. For simplicity, the set thus formed is designated "PVC semimanufacture".

The recipe in table 1 is a typical recipe of PVC-based artificial leather materials typically revealing fissures after contacting with oil.

In an embodiment, in the second stage, a thermoplastic polyurethane layer, whose composition and structure were optimized in orderto create an improved barrier effect of the PVC semimanufacture against contact with oil and grease (from the driver and passenger's body which may be simulated through VDA 230-225 with a mixture of babassu oil (CAS 91078-92-1), jojoba oil (CAS 61789-91-1), squalene (CAS 111-02-4)) was applied on the "PVC semimanufacture" produced in the first stage, preventing fissuring thereof through the extraction of the plasticiser, wherein, for best results, the "PVC semimanufacture" was pre-heated with infrared.

[A simple/any TPU layer could retard the contact between human body oil and grease and the PVC semimanufacture (which causes fissuring), but not prevent it as these oils migrate through TPU. The optimization concerning the composition of the TPU compact layer ("TPU compact layer") in sublayers was done considering the absorption capacity of different TPUs for the oil and grease typically present in the interior of an automobile. The absorption of oil should be maximal in the aromatic TPU and minimal in the aliphatic TPU. In this way, the migration of oil on the right side into the PVC intermediate layer is minimized. In addition to this, any oil which penetrates the aromatic layer allows absorption, acting as a retention layer. In particular, the existence of the aliphatic TPU layer in contact with the PVC and an aromatic TPU sublayer, allows an increasingly greater adhesion between PVC and TPU, since it avoids direct contact with the aromatic TPU, which would absorb some plasticiser from the PVC intermediate layer. The material with greatest absorption capacity is the one comprising an aromatic TPU sublayer and another aliphaticTPU sublayer in contact with the PVC; thus improving the adhesion to PVC and thereby the performance of the material described (see table 2).

In this way, the creation of sublayers inside the TPU compact layer (through co-extrusion process) allows having an aromatic TPU sublayer with high absorption of oil and grease ("TPU-B"), an aliphatic TPU sublayer adjusted to the right side (which receives UV radiation in the interior of the automobile) which has good UV resistance and the same recipe on the reverse side has good adhesion to PVC ("TPU-A"): despite not absorbing oil and grease, due to reduced absorption of oil, preventing their contact/presence on the surface of the PVC (fault mechanism). In order to guarantee greater adhesion between the TPU layer and the PVC semimanufacture, the TPU layer is glued (laminated) to the PVC semimanufacture during the extrusion process, therefore contacting with the PVC while in the melted form. For the thermal adhesion to be improved, the PVC semimanufacture is also heated by infrared so that it also becomes soft, thus increasing the affinity to the aliphatic TPU sublayer. The temperature the infrared confers to the PVC semimanufacture cannot be excessive as it can degrade it. Also for this reason, in preferred embodiments, the surface layer of the PVC semimanufacture is compact and non-foam, for being more resistant to infrared heating and increasing the contact surface with the TPU compact layer. These results may also be improved with infrared of the PVC layer in contact with the TPU layer.

In an embodiment, the TPU layer may be extruded with a single-screw or twin-screw extruder. The twin-screw extruder may be co-rotating or counter-rotating. The screws must be properly designed for the polymer. A co-rotating twin-screw extruder with suitable screw design should preferably be used. Preferably the temperature in the extruder may range between 150-230 °C.

In an embodiment, the TPU layer may have a plurality of sublayers. These sublayers may have different partitions obtained through the use of different cassettes in the co-extrusion block, wherein aliphatic outer layers and an aromatic inner layer are preferred.

In an embodiment, after the co-extrusion block, the polymer may pass through a spinneret to form the molten mass, preferably the spinneret should be flat and internally designed in suitable manner for the fluidity of the polymer. Preferably the spinneret temperature may range between 140-200 °C.

In an embodiment, after exiting the spinneret, the molten mass can be passed through a calender where it will cool and be thickness controlled. In the calender, the extruded polymer may pass between a support (PVC semimanufacture) and a smooth or engraved cylinder or between two supports, one of which being the PVC semimanufacture and the other on the right side so as to confer a finishing at the extruder's outlet, which can be smooth or engraved, preferably in the calender the polymer must pass between a support (PVC semimanufacture) and a smooth cylinder. Preferably the temperature of the cylinders in the "calender" may range between 10-30 °C.

In an embodiment, the PVC semimanufacture can be heated with infrared before coming into contact with the polymer. Preferably the PVC semimanufacture is heated on the PVC side preferably with an infrared panel. Even more preferably the temperature may range between 60-150 °C.

At the end of this stage, it is possible to obtain part of the material- "PVC+TPU semimanufacture".

The material may be further improved with finishing processes, common in the production of artificial leather, such as for example lacquering by rotogravure. This process is common in the production of artificial leather. However, in the case of PVU, in order to improve the required quality, due to the tension difference between the substrate and the PVC/TPU layers, better results are obtained when the PVC layer is preheated prior to coming into contact with the TPU layer.

In another embodiment, the surface layer of the PVC semimanufacture can be compact and non-foam, in order to be more resistant to the engraving process.

The present flexible composite material presents an increasingly low fissuring/tearing (anti-crack) when applied in upholstery, compared to the state of the art materials, namely High Solids PUR and PVC.

So being, compared with the current state of the art in synthetic PVC-based leather, the present disclosure presents greater processing flexibility, the possibility of containing greater amount of recyclable material (TPE) and lower migration of PVC constituents, namely its plasticiser, thus conferring the final material a longer lifecycle whose durability is critical for automobile manufacturers.

The different methods show that flexible composite PVC-based upholstery tends to present fissures and/or deformation under extreme conditions, namely when exposed to low temperatures.

In an embodiment, the flexible composite material applied in upholstery for automobiles presents in both situations of extreme heat/cold a good resistance to impact, fatigue and crack even after 72h at 40 °C and 10.000 flex cycles at -20 °C (by the VDA 230-225:2014 method), and it is noted that the material presents a very good resistance to impact and fatigue even after 50,000 cycles (by the VDA 230-225 method).

Generically, the VDA 230-225 test applies a mixture of oils (namely babassu oil (CAS 91078-92-1), jojoba oil (CAS 61789-91-1) squalene (CAS 111-02-4)) during 72h at 40 °C and 10 000 flexures at -20 °C on a sample of the material under test, after which the fatigue and flexure of the material are measured.

Throughout the specification and claims the word "comprising" and variations thereof, are not intended to exclude other technical features, additives, components, or steps. Additional objects, advantages and features of the disclosure will become apparent to those skilled in the art upon examination of the specification, or may be learned upon practice of the disclosure. The following examples and drawings are provided by way of illustration and are not intended to be limiting of the present disclosure. Furthermore, the present disclosure covers all possible combinations of particular or preferred embodiments herein described.

The embodiments described above are combinable.

The present disclosure is of course in no way restricted to the embodiments herein described and a person of ordinary skill in the art will be able to provide many modification possibilities thereto and substitutions of technical features for equivalents, according to requirements in each situation, as defined in the appended claims.

The following claims set out further preferred embodiments.

## Claims

1. Flexible composite material comprising the following layers:
a support layer selected from the following list: fabric, knitted fabric, non-woven fabric, foam, or mixtures thereof;
an intermediate layer of polyvinyl chloride, PVC, containing a plurality of sublayers;
a compact layer of thermoplastic polyurethane, TPU, containing a plurality of sublayers;
an outer lacquer or varnish layer;
wherein the TPU compact layer comprises:
an aliphatic TPU sublayer in contact with the PVC layer;
one or more aromatic TPU intermediate sublayers;
an aliphatic or aromatic TPU sublayer, in outer contact.

2. Flexible composite material according to the previous claim, wherein the material is resistant to impact and fatigue according to VDA 230-225: 2014 standard after at least 10,000 flex cycles, preferably at least 30,000 flex cycles, preferably at least 50,000 flex cycles, preferably at least 1,000,000 flex cycles.

3. Flexible composite material according to the previous claim, wherein the material is resistant to impact and fatigue according to VDA 230-225:2014 standard with oil, 14 days at 100 °C and 10,000 flex cycles at -20 °C, preferably 30,000 flex cycles.

4. Flexible composite material according to any previous claim, wherein the TPU sublayer in contact with the outer layer is an aliphatic TPU.

5. Flexible composite material according to any previous claim, wherein the TPU layer is extruded and/or wherein the PVC layer is obtainable through coating.

6. Flexible composite material according to any previous claim, wherein the aliphatic TPU is selected from a list constituted by: TPU comprising polyols and isocyanates; in particular: hexamethylene diisocyanate, isophorone diisocyanate, 2-methylphenthane diisocyanate, 2,4,4-trimethylhexanethylene diisocyanate, norbornane, isophorone diisocyanate; dicyclohexylmethane diisocyanate, meta-tetramethylxylene diisocyanate; 1,4-cyclohexane diisocyanate, polyether, polyester, polycaprolactone, polycarbonate, polyols derived from castor oil, hydroxylated liquid polybutadienes (HLPBs), acrylics or mixtures thereof.

7. Flexible composite material according to any previous claim, wherein the aromatic TPU is selected from a list constituted by the following compounds:
4,4'-diphenyl methane diisocyanate, diisocyanatemethylbenzene, toluene diisocyanate and 1,5-naphthalene diisocyanate, p-phenylene diisocyanate isomers thereof; or mixtures thereof.

8. Flexible composite material according to any previous claim, wherein the thickness of the PVC layer is 0.2 mm - 0.65 mm.

9. Flexible composite material according to any previous claim, wherein the thickness of the TPU layer is 0.15 mm - 0.5 mm.

10. Flexible composite material according to any previous claim, wherein the TPU layer comprises between 1-5 sublayers, preferably 2-3 sublayers.

11. Flexible composite material according to any previous claim wherein the lacquer is selected from a solvent- or aqueous-based lacquer or lacquers-based list:
polyurethane, acrylic, vinyl acrylic, polyamide, reticulated by isocyanate,
polycarbodiimide or by ultraviolet radiation by resorting namely to acrylate and photoiniator groups, or mixtures thereof.

12. Flexible composite material according to any previous claim wherein the PVC layer is compact or expanded.

13. Flexible composite material according to any previous claim wherein the TPU and/or PVC layers further comprise pigment, additive, stabilizer, filler, plasticiser, blowing agent, expansion reaction catalyst or mixtures thereof.

14. Flexible composite material according to any previous claim each layer comprises the following thickness:
the textile support layer between 300-2000 µm, preferably 400-600 µm; the PVC layer between 50-1000 µm, preferably 200-650 µm;
the TPU compact layer between 20-1000 µm, preferably 150-500 µm;
the outer lacquer or lacquers layer between 1-100 µm, preferably 10-15 µm.

15. Upholstery or seat for automobiles comprising a flexible composite material as described in any previous claim.

16. Process for obtaining a flexible composite material according to any previous claim comprised by the following steps:
obtaining a PVC compact layer through coating or enduction of the PVC layer and a support layer;
extruding a TPU compact layer,
placing the TPU compact layer on the PVC compact layer,
in particular wherein the PVC layer which will be in contact with TPU is pre-heated by infrared.
